Europäisches Patentamt

European Patent Office

Office européen des brevets

(19)

(11) Veröffentlichungsnummer : **0 442 891 B1**

(12) # EUROPÄISCHE PATENTSCHRIFT

(45) Veröffentlichungstag der Patentschrift :
**15.07.92 Patentblatt 92/29**

(51) Int. Cl.⁵ : **B01D 29/82,** B01D 29/33,
B30B 9/22

(21) Anmeldenummer : **89908975.9**

(22) Anmeldetag : **10.08.89**

(86) Internationale Anmeldenummer :
**PCT/EP89/00944**

(87) Internationale Veröffentlichungsnummer :
**WO 90/05014 17.05.90 Gazette 90/11**

(54) **VERFAHREN UND VORRICHTUNG ZUM EINSTÜLPEN DER MEMBRAN BEI EINEM AUSPRESSFILTER FÜR SUSPENSIONEN.**

(30) Priorität : **11.11.88 DE 3838296**

(43) Veröffentlichungstag der Anmeldung :
**28.08.91 Patentblatt 91/35**

(45) Bekanntmachung des Hinweises auf die
Patenterteilung :
**15.07.92 Patentblatt 92/29**

(84) Benannte Vertragsstaaten :
**AT BE CH DE FR GB IT LI LU NL SE**

(56) Entgegenhaltungen :
**DE-A- 3 411 087**
**DE-A- 3 517 032**

(73) Patentinhaber : **HEINKEL
INDUSTRIEZENTRIFUGEN GMBH & CO.
Gottlob-Grotz-Strasse 1
W-7120 Bietigheim-Bissingen (DE)**

(72) Erfinder : **GERTEIS, Hans
Ruländerweg 7
W-7120 Bietigheim-Bissingen (DE)**

(74) Vertreter : **Griessbach, Dieter, Dr. et al
Höger, Stellrecht + Partner Uhlandstrasse 14
c
W-7000 Stuttgart 1 (DE)**

EP 0 442 891 B1

**Beschreibung**

Die Erfindung betrifft ein Verfahren und eine Vorrichtung zum Einstülpen der Membran bei einem Auspreßfilter für Suspensionen mit einem kesselförmigen Außenmantel, mit einem relativ zum Außenmantel koaxial beweglichen und den Außenmantel an seiner offenen Stirnseite lösbar verschließenden Deckel, mit einem vom Deckel koaxial zur Achse des Außenmantels abstehenden, rohrförmigen Filterelement, mit einer koaxial zwischen dem Außenmantel und dem Filterelement angeordneten, dehnbaren, schlauchförmigen Membran, die an ihrem einen Rand mit der offenen Stirnseite des Außenmantels und an ihrem anderen Rand mit der dem Deckel abgewandten, freien Stirnseite des Filterelements derart verbunden ist, daß sie sich bei koaxialer Auseinanderbewegung von Deckel und Außenmantel aus letzterem herausstülpt und bei koaxialer Zusammenführung von Deckel und Außenmantel in letzteren wieder hineinstülpt.

Ein Auspreßfilter dieser Art ist aus der DE-OS 35 16 819 bekannt. Es hat sich gezeigt, daß bei der Zusammenführung von Deckel und Außenmantel, also beim Schließen des Filters Schwierigkeiten bei der Einstülpung der .Membran in den Außenmantel auftreten, die insbesondere dazu führen, daß die Außenseite der Membran in reibenden Kontakt mit dem Öffnungsrand des Außenmantels tritt und hierdurch im Laufe der Zeit beschädigt wird.

Es ist Aufgabe der Erfindung, diesem Mangel abzuhelfen und ein Verfahren zum Einstülpen der Membran bei einem Auspreßfilter der vorgenannten Art anzugeben, das ohne Beschädigung der Membran ausführbar ist.

Die Aufgabe wird erfindungsgemäß dadurch gelöst, daß beim Zusammenführen von Deckel und Außenmantel im Inneren der membran gegenüber Umgebungsdruck ein Unterdruck ausgebildet und die Membran zur Verhinderung der Ausbildung einer einfachen, seitlich über den Rand des Außenmantels überstehenden Quetschfalte durch äußere Einflüsse verformt wird, bis sich eine seitlich über den Rand des Außenmantels nicht mehr überstehende, Drei- oder Mehrfachfaltung der Membran ergibt.

Die nachstehende Beschreibung einer bevorzugten Ausführungsform eines solchen Verfahrens und für die Durchführung des Verfahrens geeigneter Vorrichtungen dient im Zusammenhang mit beiliegender Zeichnung der weiteren Erläuterung. Es zeigen:

Fig. 1 ein Auspreßfilter mit umstülpbarer Membran im geschlossenen Zustand;

Fig. 2 das Filter aus Fig. 1 in geöffnetem Zustand mit ausgestülpter Membran;

Fig. 3 Schnittansichten entlang der Linie 3,4-3,4 und 4 in Fig. 2 und Fig. 4;

Fig. 5 schematisch eine Längsschnittansicht eines geöffneten Auspreßfilters mit Schutzeinrichtung.

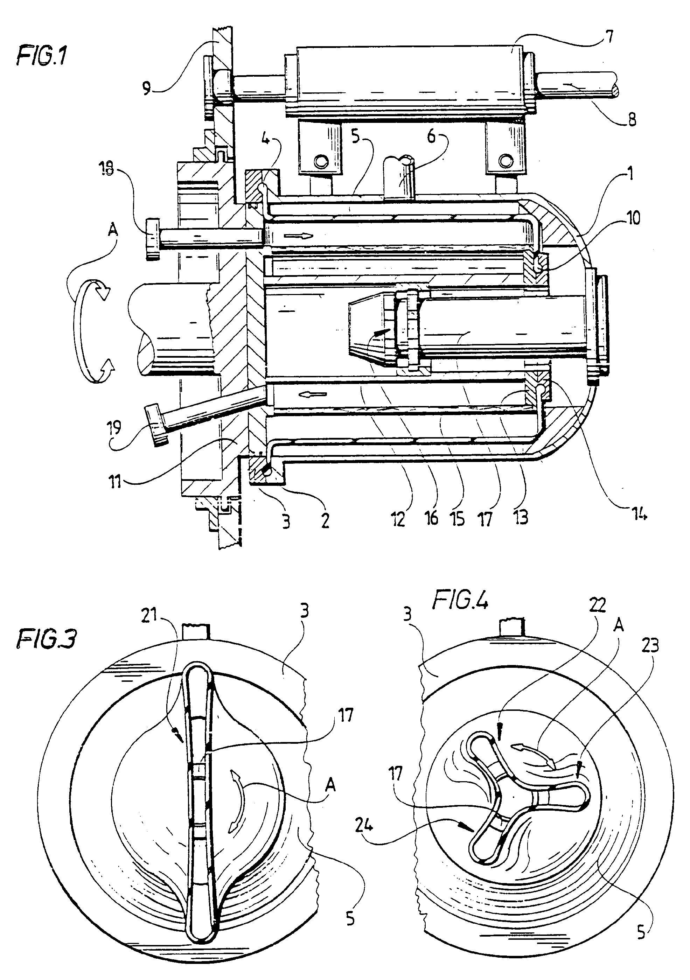

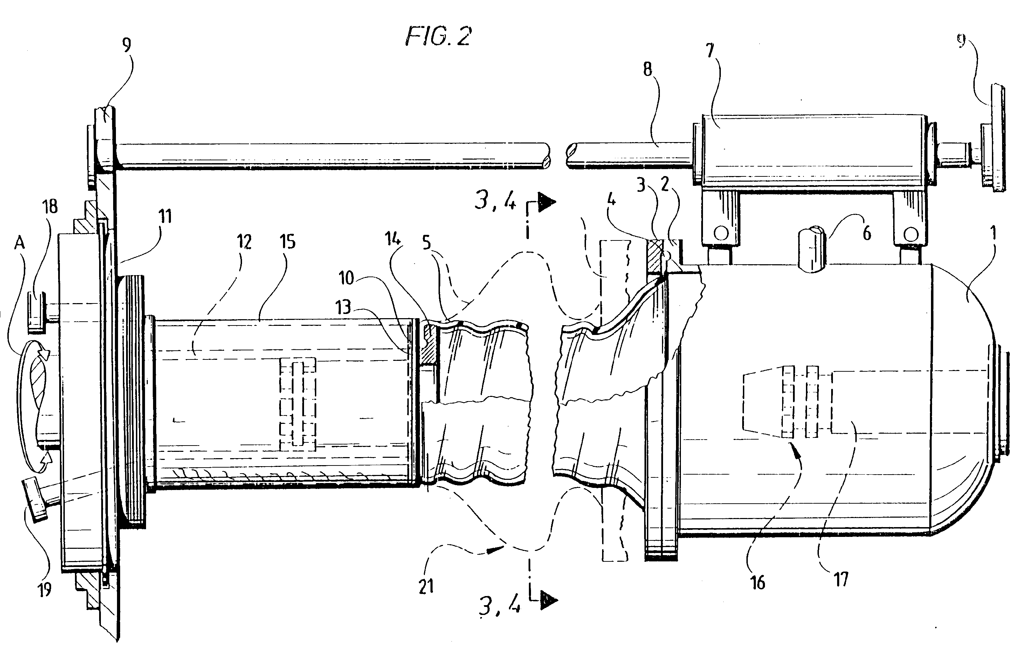

Das auf der Zeichnung dargestellte Auspreßfilter umfaßt einen kesselförmigen Außenmantel 1 von kreisrundem Querschnitt, der an seiner einen (in Fig. 1 und 2 rechts gelegenen) Stirnseite geschlossen und an seiner gegenüberliegenden Stirnseite offen ist. An seiner offenen Stirnseite trägt der Außenmantel 1 einen aus zwei Teilen 2, 3 bestehenden Umfangsflansch, zwischen die der eine Randbereich 4 einer schlauchförmigen Membran 5 aus elastisch dehnbarem Material fest eingespannt ist. Vom Außenmantel 1 geht nach oben ein Saug- und Druckstutzen 6 aus. Der Außenmantel 1 ist ferner über eine im einzelnen hier nicht beschriebene Tragkonstruktion mit einer Laufbuchse 7 lösbar verbunden, die ihrerseits auf einer ortsfesten Stange 8 parallel zur Achse des Außenmantels 1 verschieblich ist.

An einem die Stange 8 tragenden Maschinengestell 9 ist koaxial zum Außenmantel 1 drehbar (Doppelpfeil A) ein Deckel 11 zum dichten Verschließen der offenen Stirnseite des Außenmantels 1 gelagert. Von der dem Außenmantel 1 zugewandten Innenseite des Deckels 11 steht starr ein Rohr 12 ab. Dieses trägt an seinem freien Ende einen Stirnflansch, der ähnlich wie der Flansch an der Öffnung des Außenmantels 1 aus zwei Teilen 13, 14 besteht. Zwischen diesen Teilen 13, 14 ist der andere Rand 10 der Membran 5 fest eingespannt.

Zwischen der Innenseite des Deckels 11 und dem Flanschteil 13 erstreckt sich ein rohrförmiges Filterelement 15, beispielsweise in Gestalt eines mit einem Filtertuch belegten Siebzylinders. Das Filterelement 15 liegt abgedichtet an der Innenseite des Deckels 11 bzw. am Flanschteil 13 an.

In geschlossenem Zustand des Filters, wenn also Deckel 11 und Außenmantel 1 zusammengeführt sind (Fig. 1), erstreckt sich die schlauchförmige Membran 5 koaxial zwischen der Innenseite des Außenmantels 1 und der Außenseite des Filterelements 15. Im geöffneten Zustand des Auspreßfilters, wenn also Deckel 11 und Außenmantel 1 in Richtung ihrer gemeinsamen Achse auseinanderbewegt sind (Fig. 2), hat sich die Membran 5 gegenüber der Anordnung gemäß Fig. 1 umgestülpt, so daß die Innenseite der Membran nunmehr zu ihrer Außenseite geworden ist.

Während des Filtriervorganges ist das Auspreßfilter geschlossen (Fig. 1). Dabei ist der Außenmantel 1 über einen im Inneren des Rohres 12 befindlichen Bajonettverschluß 16, dessen einer Teil von einem von der geschlossenen Stirnseite des Außenmantels 1 nach innen vorstehenden Arm 17 getragen wird, und dessen anderer Teil fest im Rohr 12 angeordnet ist (vgl. Fig. 2), starr am Deckel 11 fixiert. Durch Anlegen von Unterdruck an den Stutzen 6 nimmt die membran 5 etwa die in Fig. 1 eingezeichnete Stellung ein, so daß über eine am Deckel 11 vorgesehene Zulaufleitung 18 zu filtrierende Suspension eingeleitet werden kann. Nach Beendigung des Einfüllvorgangs kann durch Anlegen von Überdruck an den Stutzen 6 die Membran 5 gegen das Filterelement 15 gedrückt werden, um restliche Flüssigkeit durch das Filterelement hindurchzupressen. Die festen Bestandteile der Suspension verbleiben als Filterkuchen auf dem Filterelement, während das durch das Filterelement 15 hindurchgepreßte Filtrat über eine ebenfalls am Deckel 11 vorgesehene Ablaufleitung 19 abfließt. Im geöffneten Zustand des Filters (Fig. 2) kann der Filterkuchen von dem dann freiliegenden Filterelement 15 entfernt werden.

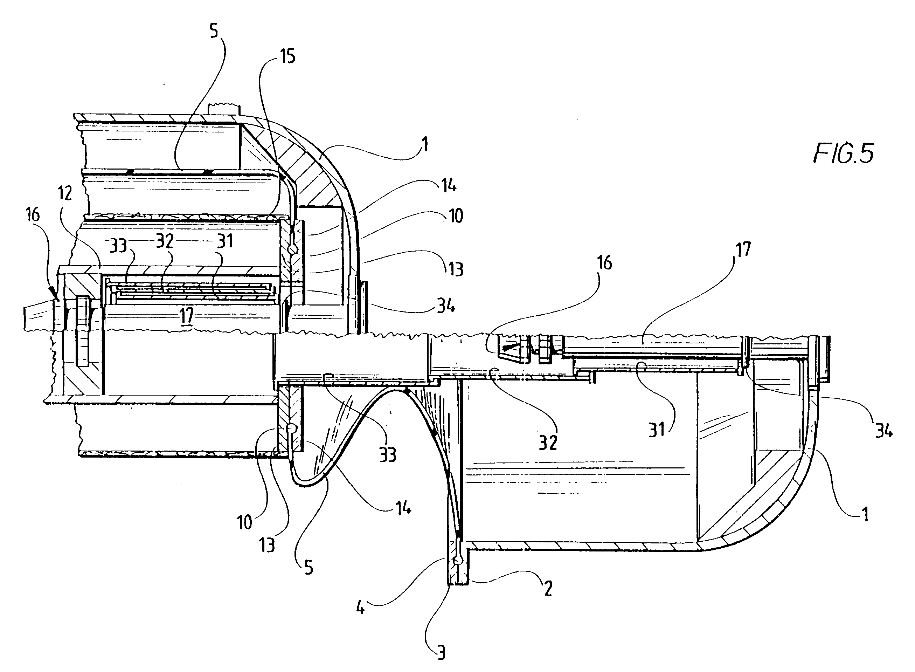

Es wurde gefunden, daß beim Übergang vom Zustand nach Fig. 2 in denjenigen nach Fig. 1 das Wiedereinstülpen der Membran 5 in den Außenmantel 1 erheblich erleichtert werden kann, wenn im Innern der sich einstülpenden Membran gegenüber Umgebungsdruck ein Unterdruck ausgebildet wird. Dies kann durch Verbinden des Stutzens 6 mit einer Saugpumpe leicht erreicht werden. Jedoch neigt die unter Unterdruck stehende Membran 5 beim Zusammenführen von Außenmantel 1 und Deckel 11 dazu, von zwei Seiten her zusammenzufallen, so daß sich eine einfache Quetschfalte ergibt, die seitlich über den vom umfangsflansch 2, 3 gebildeten Rand des Außenmantels 1 übersteht. Diese einfache Quetschfalte ist in Fig. 2 und 3 schematisch angedeutet und mit dem Bezugszeichen 21 versehen. Beim Zusammenführen von Außenmantel 1 und Deckel 11 gelangen die seitlich überstehenden Kanten der Quetschfalte 21 in kräftigen Reibungskontakt mit dem Rand 2, 3 des Außenmantels. Hierdurch wird die Membran 5 leicht beschädigt und in ihrer Lebensdauer beträchtlich verkürzt.

Es sind daher Maßnahmen erforderlich, um beim Schließen des Auspreßfilters das Reiben der Membran 5 am Rand des Außenmantels 1 zu verhindern. Es wurde gefunden, daß dies durch äußeres Einwirken auf die Membran 5 während des Einstülpvorgangs erreicht werden kann. Beispielsweise können im Bereich der Seitenkanten der Quetschfalte 21 Hindernisse angeordnet werden, die ein seitliches Austreten der Membran verhindern. Die Membran 5 kann hierdurch gezwungen werden, sich von selbst in mehrere Falten, beispielsweise drei Falten 22, 23, 24 (Fig. 4) zu legen, die mit ihren Seitenkanten nicht mehr über den Rand 2, 3 des Außenmantels 1 vorstehen. Ferner ist es möglich, während des Einstülpvorganges an drei oder mehr Stellen seitlich auf die Membran einzuwirken, beispielsweise mit Hilfe von verschieblichen, von Kolben-Zylinder-Aggregaten angetriebenen Fingern und hierdurch zwangsläufig die Ausbildung von drei oder mehr Falten herbeizuführen.

Eine besonders einfache Maßnahme, um die Ausbildung der einfachen, seitlich überstehenden Quetschfalte 21 zu verhindern und die Ausbildung einer innerhalb des Umfangsrandes des Außenmantels 1 verbleibenden Drei- oder Mehrfachfaltung zu erreichen, besteht darin, während des Einstülpvorgangs der Membran 5 Außenmantel 1 und Deckel 11 relativ zueinander in Richtung des Doppelpfeiles A etwas zu verdrehen und die Membran 5 hierdurch zu verformen. In überraschender Weise bildet sich bei dieser Relativ-verdrehung von Außenmantel und Deckel keine einfache Quetschfalte 21 mehr, sondern es entsteht selbsttätig die in Fig. 4 dargestellte, erwünschte Dreifachfaltung 22, 23, 24.

Ein weiteres Problem beim Einstülpen der Membran 5 in den Außenmantel 1 des Einpreßfilters besteht darin, daß die sich in einer Mehrfachfaltung gemäß Fig. 4 zusammenlegende Membran mit ihrer Innenwand häufig den Durchgang des vorstehenden, einen Teil des Bajonettverschlusses 16 tragenden Armes 17 und hierdurch den Schließvorgang des Filters behindert oder sogar blockiert. Um dieses Problem zu lösen, wird erfindungsgemäß so vorgegangen, daß durch eine im Innenraum der Membran angeordnete Schutzeinrichtung ein freier Durchgang für den am Außenmantel 1 angeordneten Arm 17 ohne Membranberührung geschaffen wird. Die Schutzeinrichtung und deren Wirkungsweise ist in Fig. 5 schematisch dargestellt. Die untere Hälfte von Fig. 5 zeigt den Auspreßfilter nach Beginn der Zusammenführung von Außenmantel 1 und dem (in Fig. 5 nicht sichtbaren) Deckel 11. In der oberen Hälfte von Fig. 5 ist der geschlossene Zustand des Auspreßfilters dargestellt, bei dem sich die Membran 5 wieder zwischen den Außenmantel 1 und das Filterelement 15 eingestülpt hat.

Wie aus Fig. 5 ersichtlich, ist die erwähnte Schutzeinrichtung, welche den Arm 17 gegenüber der Innenwand der Membran 5 abschirmt, als ein diesen Arm umschließendes, aus drei Teilen 31, 32, 33 bestehendes Teleskoprohr ausgebildet, welches sich zwischen dem Rohr 12 und dem vom Arm 17 getragenen Bajonettverschlußteil erstreckt. Beim Öffnen und Schließen des Auspreßfilters wird das Teleskoprohr auseinander- bzw. zusammengeschoben, wobei insbesondere beim Schließen des Filters und Zusammenschieben des Teleskoprohrs eine Blockierung des Armes 17 durch die Membran 5 verhindert ist. Beim Auseinanderschieben des Teleskoprohres werden dessen Teile 31, 32, 33 vom rückwärtigen Rand des vom Arm 17 getragenen Bajonettverschlußteiles mitgenommen. Beim Zusammenschieben greift ein am Arm 17 vorgesehener Nocken 34 oder dergleichen am Teleskoprohr an.

Die bei der in Fig. 5 dargestellten Ausführungsform als Teleskoprohr 31, 32, 33 ausgebildete Schutzeinrichtung kann auch in anderer Weise realisiert werden. Beispielsweise könnte das Teleskoprohr durch eine Art Faltenbalg oder dergleichen ersetzt werden, der sich zwischen dem Rohr 12 und dem Arm 17 erstreckt.

EP 0 442 891 B1

**Patentansprüche**

1. Verfahren zum Einstülpen der Membran bei einem Auspreßfilter für Suspensionen mit einem kesselförmigen Außenmantel, mit einem relativ zum Außenmantel koaxial beweglichen und den Außenmantel an seiner offenen Stirnseite lösbar verschließenden Deckel, mit einem vom Deckel koaxial zur Achse des Außenmantels abstehenden, rohrförmigen Filterelement und mit einer koaxial zwischen dem Außenmantel und dem Filterelement angeordneten, dehnbaren, schlauchförmigen Membran, die an ihrem einen Rand mit der offenen Stirnseite des Außenmantels und an ihrem anderen Rand mit der dem Deckel abgewandten, freien Stirnseite des Filterelements derart verbunden ist, daß sie sich bei koaxialer Auseinanderbewegung von Deckel und Außenmantel aus letzterem herausstülpt und bei koaxialer Zusammenführung von Deckel und Außenmantel in letzteren wieder hineinstülpt,
**dadurch gekennzeichnet**, daß beim Zusammenführen von Deckel und Außenmantel im Inneren der Membran gegenüber Umgebungsdruck ein Unterdruck ausgebildet und die Membran zur Verhinderung der Ausbildung einer einfachen, seitlich über den Rand des Außenmantels überstehenden Quetschfalte durch äußere Einflüsse verformt wird, bis sich eine seitlich über den Rand des Außenmantels nicht mehr überstehende, Drei- oder Mehrfachfaltung der Membran ergibt.

2. Verfahren nach Anspruch 1, dadurch gekennzeichnet, daß die Membran durch Relativverdrehung des Außenmantels und des Deckels verformt wird.

3. Verfahren nach Anspruch 1, dadurch gekennzeichnet, daß durch eine im Innenraum der Membran angeordnete Schutzeinrichtung ein freier Durchgang ohne Membran-berührung für einen im Außenmantel angeordneten Verschlußarm geschaffen wird.

4. Vorrichtung zur Durchführung des Verfahrens nach Anspruch 3, dadurch gekennzeichnet, daß die Schutzeinrichtung als ein den Verschlußarm (17) umschließendes Teleskoprohr (31, 32, 33) ausgebildet ist, welches beim Öffnen und Schließen des Auspreßfilters vom Verschlußarm auseinander- bzw. zusammengeschoben wird.

**Claims**

1. A method for everting the membrane in a pressure filter for suspensions which filter comprises a domed outer cover, a lid which is coaxially movable relative to the outer cover and removably closes the outer cover at its open end, a tubular filter element projecting from the lid coaxially to the axis of the outer cover, and a flexible cylindrical membrane, arranged coaxially between the outer cover and the filter element, which is connected at its one end to the open end of the outer cover and at its other end to the free open end of the filter element facing away from the lid in such a manner that on coaxial movement of the lid and outer cover out of one other it is everted out of the latter and on coaxial bringing together of the lid and outer cover it is everted again in the latter,
**characterized in that** whilst the lid and the outer cover are being brought together a reduced pressure relative to the surrounding pressure is formed inside the membrane and the membrane, in order to prevent formation of a single fold projecting laterally over the edge of the outer cover, is shaped by external means until the membrane is folded so that it comprises three or more folds, none of which project laterally over the edge of the outer cover.

2. A method according to claim 1, characterized in that the shape of the membrane is changed by relative rotation of the outer cover and the lid.

3. A method according to claim 1, characterized in that by means of a protective device arranged in the interior of the membrane a free passage without contacting the membrane is provided for a closing arm arranged in the outer cover.

4. A device for using the method according to claim 3, characterized in that the protective device is constructed as a telescopic tube (31, 32, 33) surrounding the closing arm (17) which on opening or closing the pressure filter is pulled out away from the closing arm or pushed together, respectively.

**Revendications**

1. Procédé pour le retournement de la membrane d'un filtre-presse pour suspensions avec un manteau extérieur cylindrique, avec un couvercle amovible mobile coaxialement par rapport au manteau extérieur et fermant le manteau extérieur sur sa face extrême ouverte, avec un élément filtrant tubulaire s'écartant du couvercle coaxialement à l'axe du manteau extérieur et avec une membrane analogue à une gaine extensible,

4

disposée coaxialement entre le manteau extérieur et l'élément filtrant, qui est réunie par l'un de ses bords à la face extrême ouverte du manteau extérieur et, par son autre bord, à la face extrême libre de l'élément filtrant située à l'opposé du couvercle, de façon telle que, pendant le mouvement coaxial du couvercle et du manteau extérieur s'éloignant l'un de l'autre, cette membrane sort de ce dernier en se retournant, et pendant le mouvement coaxial du couvercle et du manteau extérieur se réunissant l'un l'autre, elle entre dans ce dernier en se retournant à nouveau,

**caractérisé en ce que**, lors de la réunion du couvercle et du manteau extérieur, il est créé à l'intérieur de la membrane une dépression par rapport à la pression de l'environnement et, pour empêcher la formation par aplatissement d'un pli simple avançant latéralement sur le bord du manteau extérieur, la membrane est déformée par une influence extérieure jusqu'à ce qu'il existe un pli triple ou multiple n'atteignant plus latéralement le bord du manteau extérieur.

2. Procédé selon la revendication 1, caractérisé en ce que la membrane est déformée par un mouvement de rotation relatif du manteau extérieur et du couvercle.

3. Procédé selon la revendication 1, caractérisé en ce qu'au moyen d'un dispositif de protection disposé dans l'espace intérieur de la membrane, un passage libre sans contact avec la membrane est procuré à un bras de fermeture disposé dans le manteau extérieur.

4. Dispositif pour la mise en oeuvre du procédé selon la revendication 3, caractérisé en ce que le dispositif de protection est constitué comme un tube télescopique (31, 32, 33) entourant le bras de fermeture (17) qui, lors de l'ouverture et de la fermeture du filtre - presse est déployé, et fermé, respectivement, par le bras de fermeture.

FIG.1

FIG.3

FIG.4

FIG.2

7

FIG.5

EP 0 442 891 B1